# EUROPÄISCHE PATENTSCHRIFT

(11) **EP 2 636 297 B1**
(45) Veröffentlichungstag und Bekanntmachung des Hinweises auf die Patenterteilung: **25.04.2018**
(21) Anmeldenummer: 12195992.8
(22) Anmeldetag: 07.12.2012
(51) Int. Cl.: A01D 69/06, F16H 7/12, F16H 9/16

(54) **Selbstfahrende Erntemaschine**
Self-propelled harvester
Moissonneuse automobile

(30) Priorität: 05.03.2012 DE 102012101807
(43) Veröffentlichungstag der Anmeldung: 11.09.2013
(73) Patentinhaber: CLAAS Selbstfahrende Erntemaschinen GmbH, 33428 Harsewinkel (DE)
(72) Erfinder: Behnke, Willi, 33803 Steinhagen (DE); Strieker, Norbert, 33415 Verl (DE); Kriebel, Bastian, 48155 Münster (DE)

(56) Entgegenhaltungen:
- EP-A2- 1 365 172
- WO-A1-2011/047992
- DE-A1- 2 422 221
- DE-A1- 10 312 321

## Beschreibung

Die Erfindung betrifft eine Erntemaschine mit einem Riementrieb, der eine mittelbar oder unmittelbar von einer Brennkraftmaschine angetriebene Antriebsriemenscheibe und zumindest eine Abtriebsriemenscheibe aufweist, wobei dem Riementrieb eine Riemenspanneinrichtung zugeordnet ist.

Selbstfahrende Erntemaschinen, die als selbstfahrende Mähdrescher oder selbstfahrende Feldhäcksler ausgebildet sind, können mit unterschiedlichen Erntevorsätzen betrieben werden. Frontseitig an einen Mähdrescher kuppelbare Erntevorsätze sind Getreideschneidwerke oder Maispflücker, wobei das aufgenommene Erntegut über einen Schrägförderer einem Dreschwerk des Mähdreschers zugeführt wird. Mit dem Getreideschneidwerk kann neben sämtlichen Getreidearten auch Raps geerntet werden, so dass neben unterschiedlichen Bestandsdichten auch erhebliche Unterschiede hinsichtlich der Bestandshöhe auftreten können. Ein als Vorsatzgerät verwendeter Maispflücker entfernt über einer Zuführeinrichtung nachfolgende Pflückwalzen die Maiskolben von den Maisstengeln, woraufhin der Schrägförderer die Maiskolben dem Dreschwerk zuführt. Neben den unterschiedlichen Arten des Erntegutes ist beim Erntevorgang auch deren unterschiedlicher Zustand von Bedeutung, denn es kann sich um ein sehr trockenes Erntegut oder um feuchtes Lagergetreide mit einem großen Anteil von Unkräutern handeln.

Selbstfahrende Feldhäcksler sind ebenfalls universell einsetzbar, da ein entsprechender Erntevorsatz für den jeweiligen Einsatzfall austauschbar ist. Dabei kann es sich um unterschiedliche Arten von Schneidwerken (Messerbalken- oder Kreiselmähwerk), um Maisvorsätze zur Ernte von Silomais oder um Gras-Pickups zur Aufnahme von im Schwad abgelegten Gras handeln. Entsprechend extrem variiert auch der Durchsatz des Ernteguts durch das Häckselwerk und das anschließende Gebläse.

Für beide Arten von selbstfahrenden Erntemaschinen tritt folglich das gleiche Problem auf, wonach ein unterschiedlicher Durchsatz des Erntegutes und dessen stark variierender Zustand zu hohen Belastungsschwankungen im Antrieb des Dreschwerks bei Mähdreschern oder der Häckseltrommel sowie des Gebläses bei Feldhäckslern führt. Diese beiden Einrichtungen zur Aufbereitung des Erntegutes werden in der Regel über einen Riementrieb von der Brennkraftmaschine angetrieben. Bei Feldhäckslern erfolgt in der Regel über diesen Riementrieb ein gemeinsamer Antrieb der Häckseltrommel und des Gebläses, das für die Förderung des Häckselguts auf einen Wagen sorgt.

Daher müssen sowohl die seitens der Brennkraftmaschine verfügbare Antriebsleistung als auch der Riementrieb auf derartig hohe Leistungs- bzw. Drehmomentanforderungen bzw. Drehmomentschwankungen ausgelegt sein, wobei ein entsprechend stark vorgespannter Riementrieb, mit dem für alle Bedingungen eine ausreichende Riemenanpresskraft an die Riemenscheiben gewährleistet wird, einen erhöhten Leistungsbedarf zur Folge hat. So sind beispielsweise bei eingeschaltetem Erntevorsatz und eingeschaltetem Dreschwerk eines Mähdreschers bereits im Leerlauf 30 bis 40% der Maximalleistung der Brennkraftmaschine erforderlich.

Wird allerdings die Riemenspannung reduziert, so reicht diese unter bestimmten Erntebedingungen nicht mehr aus, so dass beispielsweise bei Mähdreschern der im Riementrieb auftretende Schlupf zu Verstopfungen im Dreschwerk führen kann. Wird aber der Riementrieb, wie bereits dargelegt, so extrem vorgespannt, dass in sämtlichen Betriebszuständen Schlupf vermieden wird, so tritt dadurch einerseits innerhalb des Riementriebs ein erheblicher Leistungsbedarf auf; andererseits ist der Antriebsriemen aufgrund der Dauerbelastung einem stärkeren Verschleiß ausgesetzt, und die hohe Riemenspannung wirkt auch auf die zur Lagerung der An- und Abtriebsriemenscheiben vorgesehenen Wälzlager, wodurch deren Lebensdauer unter Umständen erheblich reduziert werden kann.

Eine Erntemaschine mit einem Riementrieb der im Oberbegriff des Patentanspruchs 1 angegebenen Gattung ist aus der DE 103 12 321 A1. Dieser Riementrieb kann zum Antrieb verschiedener Baugruppen der Erntemaschine vorgesehen sein, wobei ein zwischen zwei Riemenscheiben verlaufender Treibriemen über eine federbelastete Spannrolle gespannt werden soll.

Weiterhin ist aus der EP 1 365 172 A2 ein Riementrieb mit einer Zugmittelspanneinrichtung bekannt, wobei die Zugmittelspanneinrichtung zum schnellen Ein- oder Auskuppeln eines Antriebs einer Maschine dienen soll und zu diesem Zweck eine auf einem Hebel angeordnete Spannrolle die Riemenspannung soweit reduziert, dass kein Drehmoment übertragen wird, oder die Riemenspannung erhöht. Diese Spannrolle greift am Lostrum des Riementriebs an, wobei ein Lösen oder Anspannen der Zugmittelspanneinrichtung mit Hilfe eines hydraulischen Verstellantriebes erfolgt.

Schließlich ist aus der DE 102 32 328 A1 ein Riementrieb mit einer bedarfsgerechten Zugmittelspannung für einen Starter-Generator-Antrieb für eine ein Kraftfahrzeug antreibende Brennkraftmaschine bekannt. In einer derartigen Anordnung wirkt die Starter-Generator-Einheit während des Startvorgangs der Brennkraftmaschine als Starter und anschließend als Generator. Dadurch wirkt die Last in unterschiedlichen Richtungen, d. h., dass der zwischen zwei Riemenscheiben verlaufende Riemenabschnitt, der während des Startvorgangs als Zugtrum wirkt, im Betrieb als Generator aber die Funktion eines Lostrums übernimmt. Auf diesen Lastwechsel muss die entsprechende Ausbildung der Spannvorrichtung abgestimmt sein. Die entsprechende Spannvorrichtung soll daher aufgrund unterschiedlicher Betriebsparameter der Brennkraftmaschine verstellt werden, so dass zu Beginn eines Startvorgangs die Riemenspannung erhöht wird.

Es ist Aufgabe der vorliegenden Erfindung, ein Riementriebsystem für eine Erntemaschine zu schaffen, das an unterschiedliche Erntebedingungen anpassbar ist.

Diese Aufgabe wird, ausgehend vom Oberbegriff des Patentanspruchs 1 in Verbindung mit dessen kennzeichnenden Merkmalen gelöst. Gemäß dem kennzeichnenden Teil soll die Erntemaschine einen Erntevorsatz und eine diesem in Richtung des Erntegutflusses nachgeordnete, über den Riementrieb angetriebene Einrichtung zur Aufbereitung des Ernteguts aufweisen, wobei eine von der Riemenspanneinrichtung im Riementrieb erzielte Spannkraft mittels einer Stelleinrichtung in Abhängigkeit von Art und Zustand des Erntegutes verstellbar ist.

Somit kann durch eine Änderung der Riemenspannung und folglich der Riemenanpresskraft an die Riemenscheiben eine Anpassung an das jeweilige zu übertragende Drehmoment erzielt werden. Diese Anpassung erfolgt bedarfsabhängig, d. h., bei einem geringen zu übertragenden Drehmoment wird zur Verringerung des Leistungsbedarfs und der Belastung des verwendeten Riemens sowie zur Reduzierung der Belastung der Wälzlager die Riemenspannkraft relativ gering gehalten. Bei der Art des Erntegutes, die dabei Einfluss auf eine Änderung der Riemenspannkraft haben soll, kann es sich beispielsweise darum handeln, ob mit einem Schneidwerk eines selbstfahrenden Mähdreschers Getreidesorten mit relativ kleiner oder großer Halmlänge geerntet werden. Außerdem kann es bei der Art des Erntegutes auch um dessen Bestandsdichte gehen, die sich wesentlich auf die der nachfolgenden Einrichtung zur Aufbereitung des Ernteguts zugeführten Menge und somit auf das erforderliche Drehmoment auswirkt. Ferner kann es sich um geänderte Voraussetzungen handeln, wenn anstelle von Getreide Raps oder Mais geerntet wird.

Ist die Erntemaschine als Feldhäcksler ausgebildet, so treten unterschiedliche Anforderungen auf Grund der Art des Erntegutes auf, wenn in dem geernteten Grünfutter beispielsweise ein höherer Gras- oder Kleeanteil auftritt. Darüber hinaus kann der selbstfahrende Feldhäcksler, wie bereits dargelegt auch für die Ernte von Silomais verwendet werden, wobei in diesem Fall die Fahrgeschwindigkeit der Erntemaschine bei diesem Erntevorgang generell so anzupassen ist, dass die Maschine nicht überlastet wird. Gleichwohl soll auch hier eine Anpassung des entsprechenden Riementriebs an das zu übertragende Drehmoment dadurch erfolgen, dass die Riemenandruckkraft entsprechend beeinflusst wird.

Beim Zustand des jeweiligen Erntegutes ist bei einem Mähdrescher danach zu unterscheiden, ob optimale Erntebedingungen herrschen, d. h., dass kein Lagergetreide auftritt, das Erntegut einen gleichmäßigen Reifegrad aufweist und aufgrund der klimatischen Bedingungen Getreide in einem sehr trockenen Zustand geerntet werden kann. Wenn es sich dann beispielsweise um die Getreidearten Weizen oder Gerste mit einem verhältnismäßig geringen Strohanteil handelt, so kann das Dreschwerk eines selbstfahrenden Mähdreschers mit relativ geringer Riemenspannkraft angetrieben werden. Treten allerdings im Bestand Stellen auf, in denen das zu erntende Getreide feucht ist oder einen hohen Grünanteil aufweist, so steigen trotz der gleichen Getreideart die Anforderungen an den Riementrieb. Bei diesem Grünanteil kann es sich um unreifes Getreide oder um einen hohen Anteil von Unkräutern handeln.

Neben der Möglichkeit, die Riemenspannkraft nach den vorgenannten Kriterien zu ändern, besteht auch die Möglichkeit, einer Aktuatorik des Riemenspanners einen oder mehrere Sensoren zuzuordnen, die beispielsweise den Erntegutfluss zwischen Erntevorsatz und der Einrichtung zur Aufbereitung des Erntegutes. Denkbar wäre es dabei auch, bei Mähdreschern die Feuchtigkeit des Erntegutes zu überwachen.

Demgegenüber handelt es sich bei der Riemenspanneinrichtung nach der DE 103 12 321 A1 um einen Riemenspanner, dessen Spannhebel über eine Druckfeder vorgespannt ist. Die Vorspannung soll dabei über mehrere Spindelmuttern eingestellt werden. Diese Einstellung erfolgt nur im Rahmen von Reparatur- und Wartungsarbeiten. Bei dem Riementrieb nach der EP 1 365 172 A2 ist die Riemenspannvorrichtung nur zum Ein-oder Auskuppel eines Antriebes vorgesehen. Nach der DE 102 32 328 A1 soll zwar ein Riemenspanner über ein Regelglied einstellbar sein; dabei erfolgt aber für einen Riementrieb, der eine Starter-Generator-Einheit antreibt, eine Verstellung des Riemenspanners unter Berücksichtigung der unterschiedlichen Betriebszustände der Brennkraftmaschine.

In weiterer Ausgestaltung der Erfindung ist vorgesehen, dass die selbstfahrende Erntemaschine als Mähdrescher ausgebildet ist und der Riementrieb zum Antrieb eines Dreschwerks dient. Dabei handelt es sich zumeist um ein als Keilriementrieb ausgebildetes Variatorgetriebe, dessen Antriebsscheibe unmittelbar oder mittelbar von der Brennkraftmaschine angetrieben wird. Die Abtriebsscheibe befindet sich in diesem Fall auf einer Welle der Dreschtrommel oder bei einer Mehrtrommelanordnung erfolgt von der Abtriebsscheibe aus ein Antrieb der einzelnen Trommeln dieser Mehrtrommelanordnung. Die erfindungsgemäße Verstellung der Riemenspanneinrichtung eignet sich in besonderer Weise für den Antrieb eines Dreschwerks eines Mähdreschers, da an diesem während des Betriebs erhebliche Belastungsschwankungen auftreten können.

Weiterhin besteht die Möglichkeit, die selbstfahrende Erntemaschine als Feldhäcksler auszubilden, wobei der Riementrieb dann zum Antrieb einer Häckseltrommel und eventuell eines Gebläses dienen soll. Wie bereits dargelegt, treten auch im Antrieb der Häckseltrommel und/oder eines dieser nachgeschalteten Gebläses erhebliche Belastungsschwankungen auf, die ihre Ursache in der unterschiedlichen Art des Häckselgutes und im Zustand desselben haben. Daher ist es sinnvoll, auch diesen Antrieb mit einer erfindungsgemäßen Verstelleinrichtung zu versehen.

Für eine manuelle Einstellung der Art und/oder des Zustands des Ernteguts weist die Erntemaschine eine mit der Stelleinrichtung in Verbindung stehende Eingabeeinrichtung auf. Diese Eingabeeinrichtung soll dabei innerhalb einer Bedienungskonsole im Fahrerstand des Mähdreschers oder Feldhäckslers vorgesehen sein. Der Fahrer nimmt in diesem Fall also unter Berücksichtigung der Getreideart, der Bestandshöhe bzw. - dichte sowie des Zustands des im zu erntenden Bestand vorhandenen Ernteguts eine manuelle Einstellung vor. Diese Einstellung kann er jederzeit ändern, sobald sich die entsprechenden Voraussetzungen wieder verändern.

Weiterhin soll der Antriebsriemenscheibe sowie der Abtriebsriemenscheibe jeweils zumindest ein Drehzahlsensor zugeordnet sein, wobei die von diesen Drehzahlsensoren ermittelten Messwerte einer mit der Stelleinrichtung verbundenen Regeleinrichtung zugeführt werden. Mit Hilfe dieser Drehzahlsensoren kann ein Schlupfzustand im Riementrieb ermittelt werden, wobei über die Regeleinrichtung und eine entsprechende Aktuatorik direkt eine Veränderung der Riemenspannkraft herbeigeführt wird.

Als verstellbare Riemenspanneinrichtung eignet sich insbesondere eine Anordnung, bei der die Spannrolle drehbar auf einem Spannarm angeordnet ist, wobei am Spannarm ein Hydraulikzylinder angreift. Zur Verstellung der Spannkraft dieser Riemenspanneinrichtung wird der im Hydraulikzylinder auf einen entsprechenden Kolben wirkende Arbeitsdruck derart variiert, dass die Spannrolle mit geringer oder großer Kraft gegen den Riemen im Bereich des Lostrums gespannt wird. Anstelle dieser Hebelanordnung kann die Rolle aber auch über einen Exzenter verstellt werden, wobei dann mit Hilfe einer entsprechenden Hydraulik ein Verschwenken des Exzenters erfolgt.

Gemäß einer nichtbeanspruchten Ausgestaltung kann der Riementrieb als stufenlos verstellbares Keilriemengetriebe ausgebildet sein, bei dem zur Veränderung des Übersetzungsverhältnisses mittels einer Verstellvorrichtung die Durchmesser der Antriebs-und der Abtriebsriemenscheibe synchron verändert werden, wobei zur Schlupfverringerung und/oder als vorbereitende Maßnahme zur Schlupfvermeidung durch die Stelleinrichtung eine zusätzliche Verstellung der Antriebsriemenscheibe und/oder der Abtriebsriemenscheibe in Richtung einer Durchmesservergrößerung erfolgt. In diesem Fall kann daher auf einen separaten Riemenspanner verzichtet werden, da alleine durch die als Kegelscheiben ausgebildeten Elemente der Antriebs- und Abtriebsriemenscheibe eine Veränderung der Vorspannung erzielt werden kann.
In weiterer nichtbeanspruchter Ausgestaltung dieser Anordnung mit einem stufenlos verstellbaren Keilriemengetriebe soll das Keilriemengetriebe hydraulisch verstellbar sein und die Stelleinrichtung einen Druckumsetzer in Form eines einen Servoraum und einen Verdrängerraum begrenzenden Hydraulikkolbens aufweisen, über dessen Verdrängerraum der Verstellung des Keilriemengetriebes eine definierte Ölmenge zuführbar ist. Wenn dabei diese definierte Ölmenge der Antriebsriemenscheibe zugeführt wird, so kann neben dem Effekt der Erhöhung der Riemenspannkraft auch erreicht werden, dass sich insgesamt das Übersetzungsverhältnis derart verändert, dass daraus eine höhere Abtriebsdrehzahl resultiert. Mittels des erfindungsgemäßen Druckumsetzers ist eine Erhöhung des Arbeitsdruckes erzielbar, wobei diese zusätzliche definierte Ölmenge mit höherem Arbeitsdruck der Verstellung der Riemenscheibe zugeführt wird.
Gemäß einer nichtbeanspruchten Ausgestaltung kann vorgesehen sein, den Druckumsetzer mit einer Verstellung zu versehen, so dass sich durch diese Einrichtung die der Verstellvorrichtung zugeführte maximale Ölmenge beeinflussen lässt. Schließlich ist vorgesehen, dass der Servoraum des Druckumsetzers über ein Drossel-Rückschlagventil und ein 3/2-Wegeventil mit einer Druckquelle oder einem Tankanschluss verbindbar ist. Das Drossel-Rückschlagventil sorgt dafür, dass bei einem Umschalten des 3/2-Wegeventils auf eine Entleerung des Servoraums in den Tank die Riemenanpresskraft nicht mit hoher Geschwindigkeit einbricht. Die Bezugnahme der Patentansprüche auf die Zeichnung durch die Verwendung von Bezugszeichen soll den Schutzumfang der Patentansprüche auf keinen Fall auf die dargestellten Ausgestaltungsbeispiele beschränken.

Weitere Merkmale der Erfindung ergeben sich im Übrigen aus der nachfolgenden Beschreibung und aus der Zeichnung, in der zwei Ausführungsbeispiele der Erfindung vereinfacht dargestellt sind.

Es zeigen:
- Figur 1: eine Seitenansicht einer als selbstfahrender Feldhäcksler ausgebildeten Erntemaschine mit Teilschnitten im Bereich einer Häckseltrommel und einer Brennkraftmaschine,
- Figur 2: eine Ansicht auf einen Riementrieb, bei dem im Lostrum ein Riemenspanner angeordnet ist, der bei einem im Riementrieb auftretenden Schlupf verstellt wird,
- Figur 3: ein Diagramm, in welchem dargestellt ist, wie die Riemenspannkraft P von einem Fahrer der Erntemaschine vorausschauend auf einer Skala zwischen 1 und 5 verstellt werden kann,
- Figur 4: einen vorderen Abschnitt einer als selbstfahrender Mähdrescher ausgebildeten Erntemaschine, bei der die Riemenspannung in einem als Variatorgetriebe ausgebildeten Riementrieb in Abhängigkeit unterschiedlicher Parameter einstellbar ist,
- Figur 5: eine separate Darstellung eines entsprechenden in dem selbstfahrenden Mähdrescher nach Figur 4 verwendeten Riementriebs und
- Figur 6: ein Diagramm, in dessen oberen Teil das übertragende Drehmoment und im unteren Teil die entsprechende Schaltung eines in der Anordnung nach Figur 5 dargestellten Wegeventils dargestellt ist.

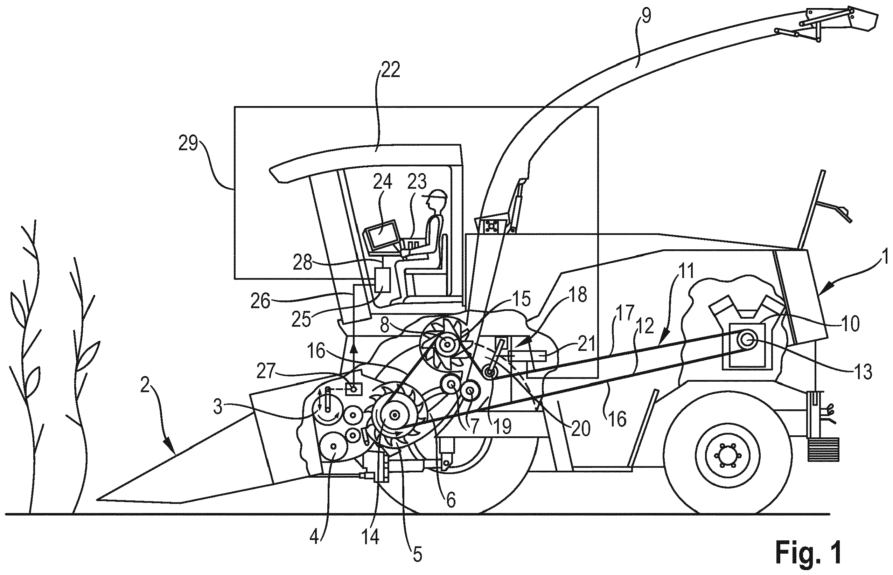

In der Figur 1 ist eine Erntemaschine dargestellt, die als selbstfahrender Feldhäcksler 1 ausgebildet ist. Dieser selbstfahrende Feldhäcksler 1 nimmt dabei einen Maisvorsatz 2 auf, der als austauschbarer Erntevorsatz an den Feldhäcksler 1 ankuppelbar ist und an den sich in Richtung des Erntegutflusses zunächst eine obere und eine untere Vorpresswalze 3 und 4 anschließen. Als Einrichtung zur Aufbereitung des Erntegutes folgt diesen eine Häckseltrommel 5, welche das Erntegut an einer nicht näher dargestellten Gegenschneide zerkleinert, woraufhin das Erntegut dann über einen Zuführschacht 6 zunächst einer Nachzerkleinerungseinrichtung 7 und anschließend einem Gebläse 8 zugeführt wird. Dieses Gebläse 8 fördert das Häckselgut durch einen verstellbaren Auswurfkrümmer 9 auf einen neben dem Feldhäcksler 1 fahrenden nicht näher dargestellten Sammelwagen.

Wie der Figur 1 weiterhin zu entnehmen ist, weist der selbstfahrende Feldhäcksler 1 eine Brennkraftmaschine 10 auf, von der ein Riementrieb 11 ausgeht, mittels welchem die Brennkraftmaschine 10 die Häckseltrommel 5 und das Gebläse 8 antreibt. Selbstverständlich steht diese Brennkraftmaschine 10 auch über weitere Antriebskomponenten mit dem Fahrantrieb des Feldhäckslers 1, mit den Vorpresswalzen 3 und 4, der Nachzerkleinerungseinrichtung 7 und weiteren Komponenten in Verbindung, wozu zum Teil weitere Riementriebe vorgesehen sind.

Der dargestellte Riementrieb 11 besteht aus einem Treibriemen 12, der als Flachriemen oder Keilriemen ausgebildet sein kann und von einer Antriebsriemenscheibe 13, die unmittelbar oder mittelbar auf der Kurbelwelle der Brennkraftmaschine 10 angeordnet ist, angetrieben wird. Weiterhin besteht der Riementrieb 11 aus einer ersten, auf einer Antriebswelle der Häckseltrommel 5 angeordneten Abtriebsriemenscheibe 14 und einer zweiten auf dem Gebläse 8 angeordneten Abtriebsriemenscheibe 15. Aufgrund einer Drehrichtung der Antriebsriemenscheibe 13 im Gegenuhrzeigersinn sind Abschnitte des Treibriemens 12, die zwischen der Antriebsriemenscheibe 13 und der ersten Riemenscheibe 14 sowie zwischen der ersten Riemenscheibe 14 und der zweiten Abtriebsriemenscheibe 15 als Zugtrum 16 ausgebildet. Dagegen befindet sich zwischen der Antriebsriemenscheibe 13 und der zweiten Abtriebsriemenscheibe 15 ein Lostrum 17, an welchem eine Riemenspanneinrichtung 18 angreift. Diese Riemenspanneinrichtung besteht aus einer Spannrolle 19, die auf einem schwenkbaren Spannhebel 20 drehbar gelagert ist, wobei der Spannhebel 20 über eine Stelleinrichtung 21 derart verschwenkt wird, dass sich die Riemenspannung des Treibriemens 12 und somit seine Anpresskraft an die Riemenscheiben 13, 14 und 15 verändern.

Weiterhin weist der selbstfahrende Feldhäcksler nach Figur 1 eine Fahrerkabine 22 auf, in welcher sich unter anderem eine Bedienkonsole 23 und ein Display 24 befinden. Ferner ist in der Fahrerkabine eine Regeleinrichtung 25 angeordnet, die über eine Signalleitung 26 mit einem Messwertaufnehmer 27 verbunden ist. Dieser Messwertaufnehmer 27 steht derart mit der oberen Vorpresswalze 3 in Verbindung, dass darüber die der nachfolgenden Häckseltrommel 5 zugeführte Erntegutmenge ermittelt werden kann. Dieses Signal wird über die entsprechende Signalleitung 26 der Regeleinrichtung 25 zugeführt und in dieser verarbeitet. Weiterhin steht die Regeleinrichtung 25 über eine Signalleitung 28 mit der Bedienkonsole 23 in Verbindung, wobei der Fahrer über die Bedienkonsole 23 Informationen über die Art und/oder den Zustand des Erntegutes eingeben kann.

Auch diese eingegebenen Daten werden innerhalb der Regeleinrichtung 25 verarbeitet, wobei ein Ausgangssignal aus der Regeleinrichtung 25 über eine weitere Signalleitung 29 an die Stelleinrichtung 21 ausgegeben wird. Treten besondere Bedingungen auf, die auf ein höheres von dem Riementrieb 11 zu übertragendes Drehmoment schließen lassen, so kann der Fahrer bereits Voreinstellungen mit Hilfe der Bedienkonsole 23 vornehmen, und es findet zusätzlich eine Überwachung des Erntegutstroms mittels des Messwertaufnehmers 27 statt, so dass aufgrund dessen eine noch präzisere Einstellung mit entsprechender Variation der Riemenspannung erfolgen kann.

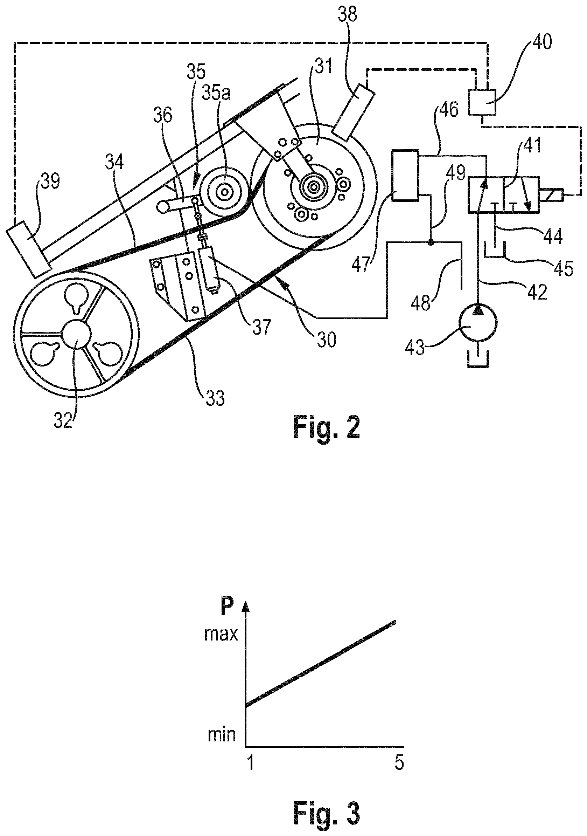

In der Figur 2 ist ein Riementrieb 30 dargestellt, dessen Einrichtung zur Veränderung einer Riemenspannung der erfindungsgemäßen Ausbildung nach Figur 1 ähnelt. Der Riementrieb 30 weist eine Antriebsriemenscheibe 31, eine Abtriebsriemenscheibe 32 und einen Treibriemen 33 auf. An einem Lostrum 34 des Treibriemens 33 liegt eine Spannrolle 35a einer Riemenspanneinrichtung 35 an, die drehbar auf einem Spannhebel 36 geführt ist, an. Der Spannhebel 36 wird dabei mittels eines Hydraulikzylinders 37 derart verschwenkt, dass die Spannrolle 35a mit unterschiedlicher Kraft auf den Treibriemen 33 einwirkt. Ein innerhalb des Riementriebes 30 auftretender Schlupf wird dabei mit Hilfe von Drehzahlsensoren 38 und 39 sowie einer Regeleinrichtung 40 erfasst. Dabei ist der Drehzahlsensor 38 der Antriebsriemenscheibe 31 zugeordnet, während der Drehzahlsensor 39 die Drehzahl der Abtriebsriemenscheibe 32 erfasst.

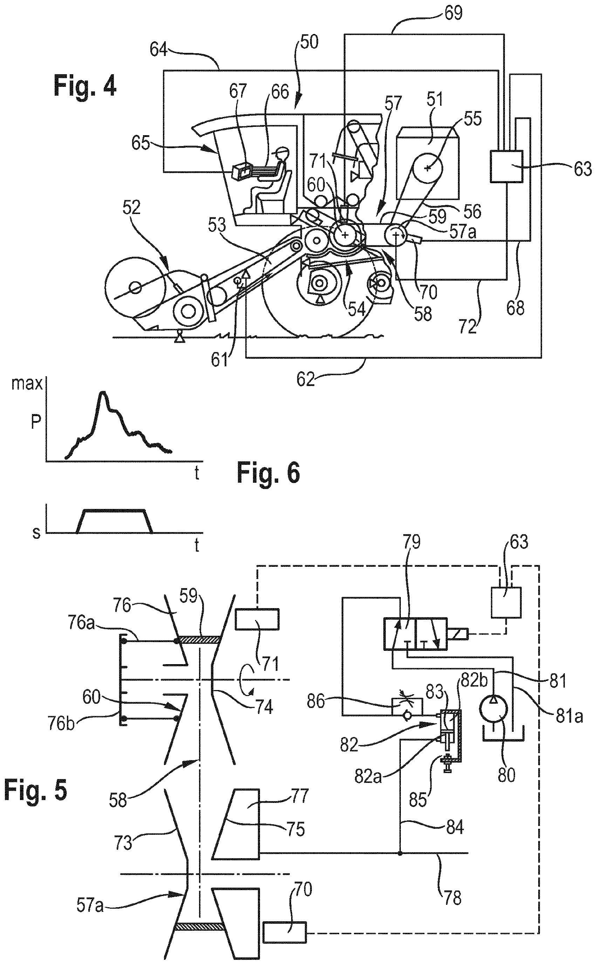

In der Regeleinrichtung 40 werden diese beiden Drehzahlwerte mit entsprechenden Sollwerten verglichen und daraus kann das Auftreten eines Schlupfes, sofern dieser vorliegt, hergeleitet werden. Die Regeleinrichtung 40 aktiviert daraufhin eine Stelleinrichtung, die aus den nachfolgend erläuterten Bauelementen besteht:
Ein elektromagnetisch vorgesteuertes 3/2-Wegeventil 41 steht zum einen über eine Druckleitung 42 mit einer Hydraulikpumpe 43 sowie andererseits über eine Tankleitung 44 mit einem Tank 45 in Verbindung. Ferner führt von dem 3/2-Wegeventil 41 eine Arbeitsleitung 46 zu einem Druckumsetzer 47, dessen Funktion im Einzelnen noch im Zusammenhang mit der Figur 5 erläutert werden wird, da dessen Funktion mit der der Einrichtung nach Figur 5 übereinstimmen soll. Zu dem Hydraulikzylinder 37 führt eine Hauptdruckleitung 48, über die für die Einstellung einer allgemeinen Vorspannung des Riementriebes Druckmittel mit einem entsprechenden Druck in den Hydraulikzylinder 37 geleitet wird. Weiterhin geht von dem Druckumsetzer 47 eine Zusatzdruckleitung 49 aus, über die eine zusätzliche Hydraulikölmenge höheren Drucks in die Hauptdruckleitung 48 eingeleitet wird. Dadurch erfolgt im Bedarfsfall eine zusätzliche Verstellung des Hydraulikzylinders 37 in Richtung einer Erhöhung der Spannkraft des Riementriebes 30.

In der Figur 3 ist ein Diagramm dargestellt, auf dessen Abszisse unterschiedliche Stufen für die Voreinstellung der Riemenspannkraft mit einem Skalenbereich von 1 bis 5 aufgetragen sind. Auf der Ordinate werden die entsprechenden Riemenspannkräfte P aufgetragen, wobei die Kurve einen kontinuierlichen Anstieg der Riemenspannkraft bei einer entsprechenden Verstellung eines Einstellelements einer Bedienkonsole 23 auf der Skala von 1 bis 5 zeigt. Eine entsprechende Verstellung soll durch den Fahrer, der vorausschauend eine Veränderung der Riemenspannkraft vornehmen will, weil er die gerade herrschenden Erntebedingungen kennt.

In der Figur 4 ist ein vorderer Abschnitt eines als Erntemaschine ausgebildeten selbstfahrenden Mähdreschers 50 dargestellt, der von einer Brennkraftmaschine 51 angetrieben wird. Weiterhin weist der Mähdrescher einen vorzugsweise austauschbaren Erntevorsatz 52 auf, der im vorliegenden Fall als Getreide- bzw. Rapsschneidwerk ausgebildet ist. Von dem Erntevorsatz 52 aus führt ein Schrägförderer 53 zu einem Dreschwerk 54, das im vorliegenden Fall als Mehrtrommelanordnung ausgebildet ist, wobei das Dreschwerk 54 zur Aufbereitung des Erntegutes, in diesem Fall Getreide oder Raps dient.

Die Brennkraftmaschine 51 weist dabei eine erste Antriebsriemenscheibe 55 auf, die über einen ersten Treibriemen 56 eine nicht näher dargestellte erste Abtriebsriemenscheibe antreibt. Dabei ist gleichachsig zu dieser ersten Abtriebsriemenscheibe eine drehfest mit ihr verbundene zweite Antriebsriemenscheibe 57a eines Riementriebs 57 angeordnet, die Bestandteil eines Variatorgetriebes 58 ist. Derartige Variatorgetriebe sind auch als CVT-Getriebe bekannt, wobei mit ihnen das Übersetzungsverhältnis durch eine stufenlose Veränderung des Riemenscheibendurchmessers verändert werden kann. Die zweite Antriebsriemenscheibe 57a steht dabei über einen zweiten Treibriemen 59 mit einer zweiten Abtriebsriemenscheibe 60 in Verbindung, wobei diese zweite Abtriebsriemenscheibe 60 auf einer Antriebswelle einer Dreschtrommel angeordnet ist.

Im Bereich des Schrägförderers 53 ist ein erster Sensor 61 angeordnet, der vorzugsweise aufgrund der Auslenkung der Förderelemente des Schrägförderers 53 eine in diesem anfallende Erntegutmenge ermittelt. Ein daraus abgeleitetes Signal wird über eine erste Signalleitung 62 einer Regeleinrichtung 63 zugeführt. Diese Regeleinrichtung 63 steht über eine zweite Signalleitung 64 mit einem innerhalb einer Fahrerkabine 65 angeordneten Bedienelement 66 in Verbindung. Auf diesem Bedienelement 66, das eine Einheit mit einem Monitor 67 bildet, kann der Fahrer in der Fahrerkabine 65 vorausschauend die Werte eingeben, die für die momentanen Erntebedingungen relevant sind. Diese Sollwerte für die entsprechende Riemenspannkraft werden über die zweite Signalleitung 64 an die Regeleinrichtung 63 übermittelt. Außerdem steht die Regeleinrichtung 63 über dritte und vierte Signalleitungen 68 und 69 mit Drehzahlsensoren 70 und 71 in Verbindung. Mittels dieser Drehzahlsensoren 70 und 71, die der zweiten Antriebsriemenscheibe 57 und der zweiten Abtriebsriemenscheibe 60 zugeordnet sind, kann ein innerhalb des Variatorgetriebes 58 auftretender Schlupf ermittelt werden, der eine Verstellfunktion auslöst.

Die Regeleinrichtung 63 steht ferner über eine Ausgangssignalleitung 72 mit einer Verstellvorrichtung der zweiten Antriebsriemenscheibe 57 in Verbindung. Dabei soll gemäß einer nichtbeanspruchten Ausführungsform die Riemenspannkraft dadurch erhöht werden, dass zumindest der Durchmesser der zweiten Antriebsriemenscheibe 57 bei konstantem Durchmesser der zweiten Abtriebsriemenscheibe 60 vergrößert wird. Es besteht aber auch die Möglichkeit, den Riemenscheibendurchmesser sowohl der zweiten Antriebsriemenscheibe 57 als auch der zweiten Abtriebsriemenscheibe 60 zu vergrößern, um dadurch eine Erhöhung der Riemenspannkraft und eine Verminderung des Schlupfes herbeizuführen. Im Hinblick auf die weitere Ausbildung der Bauelemente nach der Figur 4 wird außerdem auf die Figur 5 verwiesen.

In der Figur 5 ist das nichtbeanspruchte Variatorgetriebe 58 dargestellt, dessen zweite Antriebsriemenscheibe 57 sowie dessen Abtriebsriemenscheibe 60 jeweils aus Kegelscheiben bestehen. Dabei handelt es sich jeweils um eine ortsfeste konische Scheibe 73 und 74 sowie um eine bewegliche konische Scheibe 75 bzw. 76. Die bewegliche konische Scheibe 75 der zweiten Abtriebsscheibe 60 ist dabei über eine Druckfeder 76 a und evtl. weitere Bauelemente an einem ortsfesten Widerlager 76 b abgestützt, während die bewegliche konische Scheibe 76 der Antriebsriemenscheibe 57 über einen schematisch dargestellten Betätigungszylinder 77 in axialer Richtung verstellt wird. In diesen Verstellzylinder 77 mündet eine Hauptdruckleitung 78 ein. Weiterhin ist eine Einrichtung zur definierten zusätzlichen Verstellung der beweglichen konischen Scheibe 76 im Falle eines auftretenden Schlupfes vorgesehen, wenn dieser Schlupf über die Drehzahlsensoren 70 und 71 festgestellt wird. Die Regeleinrichtung 63 verstellt dann ein 3/2-Wegeventil 79, das in einer Schaltstellung aus einer Hydraulikpumpe 80 über eine Druckleitung 81 ein Servomittel einem Druckumsetzer 82 zuführt und in einer anderen Schaltstellung den Druckumsetzer 82 mit einer Tankleitung 81 a verbindet. Dieser Druckumsetzer 82, der einen Servoraum 82a und einen Verdrängerraum 82b aufweist, erzeugt mittels eines Kolbens 83 einen Druck in einer Ausgangsleitung 84, der höher ist als der Servodruck. Die Ausgangsleitung 84 steht unmittelbar mit der Hauptdruckleitung 78 in Verbindung.

Über eine Stellschraube 85 kann der Hub des Kolbens 83 verändert werden, wodurch sich die vom Druckumsetzer 82 gelieferte Druckmittelmenge einstellen lässt. Weiterhin ist in der Druckleitung 81 ein Drossel-Rückschlagventil 86 angeordnet, über welches eine schlagartige Reduzierung der Riemenspannkraft vermieden wird.

In der Figur 6 ist schließlich ein Diagramm gezeigt, welches in einem oberen Teil die Erhöhung der Anpresskraft des Riemens und in der unteren Hälfte, ebenfalls über die Zeit, die Einschaltdauer des 3/2-Wegeventils zeigt.

### Bezugszeichenliste

- 1: selbstfahrender Feldhäcksler
- 2: Maisvorsatz
- 3: obere Vorpresswalze
- 4: untere Vorpresswalze
- 5: Häckseltrommel
- 6: Förderschacht
- 7: Nachzerkleinerungseinrichtung
- 8: Gebläse
- 9: Auswurfkrümmer
- 10: Brennkraftmaschine
- 11: Riementrieb
- 12: Treibriemen
- 13: Antriebsriemenscheibe
- 14: erste Abtriebsriemenscheibe
- 15: zweite Abtriebsriemenscheibe
- 16: Zugtrum
- 17: Lostrum
- 18: Riemenspanneinrichtung
- 19: Spannrolle
- 20: Spannhebel
- 21: Stelleinrichtung
- 22: Fahrerkabine
- 23: Bedienkonsole
- 24: Display
- 25: Regeleinrichtung
- 26: Signalleitung
- 27: Messwertaufnehmer
- 28: Signalleitung
- 29: Signalleitung
- 30: Riementrieb
- 31: Antriebsriemenscheibe
- 32: Abtriebsriemenscheibe

- 33: Treibriemen
- 34: Lostrum
- 35: Riemenspanneinrichtung
- 35a: Spannrolle
- 36: Spannhebel
- 37: Hydraulikzylinder
- 38: Drehzahlsensor
- 39: Drehzahlsensor
- 40: Regeleinrichtung
- 41: 3/2-Wegeventil
- 42: Druckleitung
- 43: Hydraulikpumpe
- 44: Tankleitung
- 45: Tank
- 46: Arbeitsleitung
- 47: Druckumsetzer
- 48: Hauptdruckleitung
- 49: Zusatzdruckleitung
- 50: Mähdrescher
- 51: Brennkraftmaschine
- 52: Erntevorsatz
- 53: Schrägförderer
- 54: Dreschwerk
- 55: erste Antriebsriemenscheibe
- 56: erster Treibriemen
- 57: Riementrieb
- 57a: zweite Antriebsriemenscheibe
- 58: Variatorgetriebe
- 59: zweiter Treibriemen
- 60: zweite Abtriebsriemenscheibe
- 61: erster Sensor
- 62: erste Signalleitung
- 63: Regeleinrichtung
- 64: zweite Signalleitung
- 65: Fahrerkabine
- 66: Bedienelement
- 67: Monitor
- 68: dritte Signalleitung
- 69: vierte Signalleitung
- 70: Drehzahlsensor
- 71: Drehzahlsensor
- 72: Ausgangsleitung
- 73: ortsfeste konische Scheibe
- 74: ortsfeste konische Scheibe
- 75: bewegliche konische Scheibe
- 76: bewegliche konische Scheibe
- 76a: Druckfeder
- 76b: Widerlager
- 77: Verstellzylinder
- 78: Hauptdruckleitung
- 79: 3/2-Wegeventil
- 80: Hydraulikpumpe
- 81: Druckleitung
- 81a: Tankleitung
- 82: Druckumsetzer
- 82a: Servoraum
- 82b: Verdrängerraum
- 83: Kolben
- 84: Ausgangsleitung
- 85: Stellschraube
- 86: Drossel-Rückschlagventil

## Patentansprüche

1. Erntemaschine (1, 50) mit einem Riementrieb (11, 30, 57), der eine mittelbar oder unmittelbar von einer Brennkraftmaschine (10, 51) angetriebene Antriebsriemenscheibe (13, 31, 57a) und zumindest eine Abtriebsriemenscheibe (15, 32, 60) aufweist, wobei dem Riementrieb (11, 30, 57) eine Riemenspanneinrichtung (18, 35, 75, 76) zugeordnet ist, **dadurch gekennzeichnet, dass** die Erntemaschine (1, 50) einen Erntevorsatz (2, 52) und eine diesem in Richtung des Erntegutflusses nachgeordnete, über den Riementrieb (11, 30, 57) angetriebene Einrichtung zur Aufbereitung des Erntegutes (5, 8, 54) aufweist und dass eine von der Riemenspanneinrichtung (18, 35, 75, 76) im Riementrieb (11, 30, 57) erzielte Spannkraft mittels einer Stelleinrichtung (21, 37, 82) in Abhängigkeit von Art und Zustand des Erntegutes verstellbar ist, wobei die Erntemaschine (1, 50) eine mit der Stelleinrichtung (21, 37, 82) in Verbindung stehende, in einer Fahrerkabine (22) der Erntemaschine (1,50) angeordnete Eingabeeinrichtung (23, 66) aufweist, über welche die Art oder der Zustand des Erntegutes manuell eingebbar sind.

2. Erntemaschine nach Patentanspruch 1, **dadurch gekennzeichnet, dass** die selbstfahrende Erntemaschine als Mähdrescher (50) ausgebildet ist und der Riementrieb (57) zum Antrieb eines Dreschwerks (54) dient.

3. Erntemaschine nach Patentanspruch 1, **dadurch gekennzeichnet, dass** die selbstfahrende Erntemaschine als Feldhäcksler (1) ausgebildet ist, wobei der Riementrieb 11) zum Antrieb einer Häckseltrommel (5) dient.

4. Erntemaschine nach Patentanspruch 1, **dadurch gekennzeichnet, dass** der Antriebsriemenscheibe (31, 57a) und der Abtriebsriemenscheibe (32, 60) jeweils ein Drehzahlsensor (38, 39, 70, 71) zugeordnet ist, wobei deren Messwerte einer mit der Stelleinrichtung (21, 37, 82) verbundenen Regeleinrichtung (40, 63) zugeführt werden.

5. Erntemaschine nach Patentanspruch 1 oder 2, **dadurch gekennzeichnet, dass** die Riemenspanneinrichtung (18, 35) eine auf einem Spannarm (20, 36) gelagerte Spannrolle (19) aufweist, die den Riementrieb (11, 30) am Lostrum (17, 34) spannt, wobei am Spannarm (20, 36) ein Hydraulikzylinder (21, 37) angreift, der als Stelleinrichtung dient.

## Claims

1. A harvester (1, 50) comprising a belt drive (11, 30, 57) which has a drive pulley (13, 31, 57a) driven directly or indirectly by an internal combustion engine (10, 51) and at least one driven pulley (15, 32, 60), wherein a belt tensioning device (18, 35, 75, 76) is associated with the belt drive (11, 30, 57), **characterised in that** the harvester (1, 50) has a front harvesting attachment (2, 52) and a device arranged downstream of the front harvesting attachment in the direction of the flow of crop material and driven by way of the belt drive (11, 30, 57) for processing the crop material (5, 8, 54), and that a tensioning force produced in the belt drive (11, 30, 57) by the belt tensioning device (18, 35, 75, 76) is adjustable by means of an adjusting device (21, 37, 82) in dependence on the nature and state of the crop material, wherein the harvester (1, 50) has an input device (23, 66) which is connected to the adjusting device (21, 37, 82) and which is arranged in a driver's cab (22) of the harvester (1, 50) and by way of which the nature or the state of the crop material can be manually input.

2. A harvester according to claim 1 **characterised in that** the selfpropelled harvester is in the form of a combine harvester (50) and the belt drive (57) serves for driving a threshing mechanism (54).

3. A harvester according to claim 1 **characterised in that** the selfpropelled harvester is in the form of a forage harvester (1), wherein the belt drive (11) serves for driving a chopping drum (5).

4. A harvester according to claim 1 **characterised in that** a respective rotary speed sensor (38, 39, 70, 71) is associated with the drive pulley (31, 57a) and the driven pulley (32, 60), wherein the measurement values of the sensor are fed to a regulating device (40, 63) connected to the adjusting device (21, 37, 82).

5. A harvester according to claim 1 or claim 2 **characterised in that** the belt tensioning device (18, 35) has a tensioning roller (19) which is mounted on a tensioning arm (20, 36) and which tensions the belt drive (11, 30) at the slack run (17, 34), wherein a hydraulic cylinder (21 , 37) which serves as the adjusting device engages the tensioning arm (20, 36).

## Revendications

1. Machine de récolte (1, 50) comprenant un entraînement à courroie (11, 30, 57) qui comporte une poulie menante (13, 31, 57a) entraînée par un moteur à combustion interne (10, 51) et au moins une poulie menée (15, 32, 60), à l'entraînement à courroie (11, 30, 57) étant associé un équipement de tension de courroie (18, 35, 75, 76), **caractérisée en ce que** la machine de récolte (1, 50) comporte un outil frontal de récolte (2, 52) et un équipement pour préparer le produit récolté (5, 8, 54) disposé en aval de celui-ci et entraîné par l'intermédiaire de l'entraînement à courroie (11, 30, 57), et **en ce qu'**une force de tension atteinte dans l'entraînement à courroie (11, 30, 57) par l'équipement de tension de courroie (18, 35, 75, 76) est réglable au moyen d'un l'équipement de réglage (21, 37, 82) en fonction de la nature et de l'état du produit récolté, la machine de récolte (1, 50) comportant un équipement d'entrée (23, 66) qui est en liaison avec l'équipement de réglage (21, 37, 82), qui est disposé dans une cabine de conduite (22) de la machine de récolte (1, 50) et par l'intermédiaire duquel la nature ou l'état du produit récolté sont entrés manuellement.

2. Machine de récolte selon la revendication 1, **caractérisée en ce que** la machine de récolte automotrice est conformée en moissonneuse-batteuse (50), et l'entraînement à courroie (57) sert à entraîner un système de battage (54).

3. Machine de récolte selon la revendication 1, **caractérisée en ce que** la machine de récolte automotrice est conformée en ensileuse (1), l'entraînement à courroie (11) servant à entraîner un rotor de hachage (5).

4. Machine de récolte selon la revendication 1, **caractérisée en ce qu'**à la poulie menante (31, 57a) et à la poulie menée (32, 60) est respectivement associé un capteur de vitesse de rotation (38, 39, 70, 71, les valeurs mesurées de celui-ci étant envoyées à un équipement de régulation (40, 63) relié à l'équipement de réglage (21, 37, 82).

5. Machine de récolte selon la revendication 1 ou 2, **caractérisée en ce que** l'équipement de tension de courroie (18, 35) comporte un galet de tension (19) qui est monté sur un bras de tension (20, 36) et qui tend l'entraînement à courroie (11, 30) au niveau du brin mou (17, 34), sur le bras de tension (20, 36) agissant un vérin hydraulique (21, 37) qui sert d'équipement de réglage.
